Europäisches Patentamt

European Patent Office

Office européen des brevets

(19)

(11) Publication number: **0 234 856 B1**

# EUROPEAN PATENT SPECIFICATION

(45) Date of publication of patent specification: **27.11.91**

(21) Application number: **87301405.4**

(22) Date of filing: **18.02.87**

The file contains technical information submitted after the application was filed and not included in this specification

(51) Int. Cl.⁵: **C08F 240/00, C09J 125/02, A61L 15/16, A61L 15/00**

(54) **Light color, low softening point petroleum hydrocarbon resins and pressure sensitive adhesives containing such resins.**

(30) Priority: **18.02.86 US 830409**
**18.02.86 US 830410**

(43) Date of publication of application:
**02.09.87 Bulletin 87/36**

(45) Publication of the grant of the patent:
**27.11.91 Bulletin 91/48**

(84) Designated Contracting States:
**AT BE CH DE ES FR GB IT LI NL SE**

(56) References cited:
**EP-A- 0 159 821**
**EP-A- 0 175 593**
**US-A- 4 078 132**

(73) Proprietor: **EXXON CHEMICAL PATENTS INC.**
**1900 East Linden Avenue**
**Linden New Jersey 07036(US)**

(72) Inventor: **Evans, Morris Lee**
**723 Shadyglen Drive**
**Baton Rouge, LA 70805(US)**
Inventor: **Hentges, Steven George**
**1012 Stoneleigh**
**Baton Rouge, LA 70808(US)**
Inventor: **Ahner, Mary Ellen**
**2911 Rene Beauregard Avenue**
**Baton Rouge, LA 70820(US)**

(74) Representative: **Bawden, Peter Charles et al**
**EXXON CHEMICAL LIMITED EXXON CHEMICAL TECHNOLOGY CENTRE PO Box 1**
**Abingdon Oxfordshire OX13 6BB(GB)**

## Description

This invention relates to a petroleum resin having excellent tackifying properties in adhesives. More particularly, it relates to a petroleum resin having aromatic components with light color and a softening point of about 0°C to about 40°C.

This invention relates to pressure sensitived adhesive utilizing a petroleum resin having excellent tackifying properties for block or random copolymers. More particularly, it relates to a petroleum resin having a number average molecular weight (Mn) of from 100 to 600, a softening from about 0°C to about 40°C and an aromatic component to impart compatibility with certain copolymers with the requisite tackification for pressure sensitive adhesives in a binary or tertiary system with copolymers. Even though including an aromatic component, the resin employed can be characterized by light color.

Background of the Invention

Adhesives form a large part of daily activity for everyone, whether in the form of tape used to close a package or secure items together, bandages, envelopes, notepads, diaper tabs or any one of many other products in common use. The key requirements for adhesives are that they should have suitable cohesive and adhesive properties at end use conditions and during application, whether by solvent or bulk casting. Usually these adhesives are prepared from a mixture of resin, copolymer and a plasticizer to soften the adhesive and enhance tack.

Adhesives prepared from blends incorporating these polymers have very good adhesive and strength properties at room temperature and can be processed by conventional melt coating and extrusion techniques because of their good flow characteristics. Because of the excellent combination of properties exhibited by certain copolymers of a polydiene or a polyolefin and polystyrene, the use of such polymers for various pressure sensitive adhesive applications is growing in the industry.

Copolymers made from polystyrene end polydienes are widely used in the production of adhesives such as, for example, styrene/isoprene/styrene (SIS), polyethylene vinyl acetate (EVA), styrene/butadiene (SB), and styrene/polyethylene/polybutadiene/styrene (SEBS), and the like. All of these copolymers whether formed by polymerization of polymer block or by random polymerization, are blended with tackifying resins in order to form the adhesive.

However, when copolymers are mixed with tackifying resins in order to form adhesives, many requirements and factors are important such as the ease with which the resin is blended with the copolymer and the control of the tack as well as the long term properties of the adhesive. Further, the adhesives industry has increased the demand for low softening point resins and market requirements dictate the desirability of resins which are not only liquid, i.e., softening point about 40°C or less, but that are light in color, even a Gardner color of less than about 3. However, a resin would be considered to be sufficiently light in color for some applications with a Gardner color of 6 or even 7.

Many attempts have been made to prepare resins having these properties for use in the blending with copolymers to form adhesives, but all have fallen short of the mark in one respect or another. While other attempts have been made to prepare light color, low softening point resins such as those described in, for example, U.S. Patent Nos. 3,963,653; 3,931,125; 3,574,792 and 4,078,132, most attempts have been centered around the preparation of aliphatic resins of the type described, for example, in U.S. Patent Nos. 3,813,357; 3,692,756; 3,661,870; 3,804,788; 3,853,826; 3,872,064; 3,098,983 and 4,153,771. Unfortunately, aliphatic resins do not provide desired adhesive properties with many copolymers. Other components are required, usually an oil such as a naphthenic oil for example, to impart the tack or other requisite adhesive properties to the adhesive. The presence of the oil itself can cause detrimental adhesive performance. The liquid resins containing aromatic components solve these problems.

Prior attempts to incorporate aromaticity into the resin have generally caused an unacceptable high color level to result, thus making the resulting adhesive unsuitable for various uses.

Accordingly, it is an object of this invention to provide a low softening point hydrocarbon resin; i.e., from 10°C to about 30°C.

It is a further object of this invention to provide a low softening point resin having a light color while including aromatic substituents to enhance adhesive properties.

While non-aliphatic resins having very low color exist even to the point of being water white, the use of these resins to blend with some copolymers to form pressure sensitive adhesives, resins containing some aromaticity, and light color, are desired. The presence of an oil plasticizer can cause detrimental results to substrates to which the adhesive is applied. Attempts to incorporate aromaticity, and thus compatibility with the styrene portion of copolymers, to the resin have generally caused an unacceptable high color level making the resulting adhesive unsuitable for various uses.

Accordingly, it is an object of this invention to provide a pressure sensitive adhesive incorporating a low softening point, from 10°C to about 30°C, and light color aromatic-containing hydrocarbon resin.

It is a further object of this invention to provide adhesives in a binary or tertiary system of a copolymer and a low softening point resin having a light color even while including aromatic substituents to enhance adhesive properties.

## Summary of the invention.

The invention provides a hydrocarbon resin having a softening point of from 0 to 30°C obtainable by Friedel Crafts polymerization of a hydrocarbon feed comprising:

(a) from 5% to 75% by weight of the feed of a C8 to C10 vinyl aromatic hydrocarbon stream;

(b) up to 35% by weight of the feed of a piperylene stream; and

(c) from 25% to 70% by weight of the feed of a stream containing C4 to C8 monoolefin chain transfer agent of the formula $RR'C = R''R'''$ where R and R' are C1 to C5 alkyl, R'' and R''' are independently selected from H and C1 to C4 alkyl group.

The preferred resins may have a weight average molecular weight (Mw) of 110 to 1600, a number average molecular weight after finishing of (Mn) of 100 to 600 and a (Mw)/(Mn) ratio of from 1.1 to 2.7.

The resin can be blended with copolymers as indicated subsequently to provide useful adhesive compositions. The molecular weights are measured by a gel permeation chromatograph using a polyisobutylene standard and appear as mono-modal peaks on the chromatograph chart.

The color of the resins of this invention may range from less than 1 to 7 on the well known Gardner scale even though the finished resin has a vinyl aromatic content of from 10 weight percent to 60 weight percent.

The resin of this invention is attractive and functional for use in adhesives since it has both a low softening point and light color in addition to good tack and high compatibility with ethylene vinyl acetate (28-40% vinyl acetate) and other copolymers, both block and random. Heretofore, such a resin was not available. The adhesives are also part of the present invention.

The resin described above has been found to be compatible and produce good pressure sensitive adhesives, with many copolymers such as, for example, styrene/isoprene/styrene (SIS), polyethylene vinyl acetate (EVA), styrene/butadiene (SB), and styrene polyethylene polybutadiene styrene (SEBS), and the like. Generally, to prepare the adhesives of this invention, the copolymer is mixed with from about 20% to about 80% by weight of the resin with the copolymer being, correspondingly, about 80% by weight to about 20% by weight of the resin and the balance being optional components as hereinafter mentioned even though such optional materials are well recognized. These proportions will vary according to the copolymer involved, and the requirements of that copolymer to provide an adequate adhesive. As optional components, fillers and a hard resin having a softening point of about 80°C or higher can be added in amounts of from 0 to 60% by weight in order to impart additional strength to the final adhesive. Examples of such hard resins could be aliphatic resins, aliphatic/aromatic resins, aromatic resins, terpene resins, terpene aliphatic resins, rosins, rosin derivatives and hydrogenated derivatives of the foregoing resins, and the like. These resins are well known to those skilled in preparing adhesives.

## Detailed Description of the Invention

In practicing this invention to produce the novel, petroleum resins which have been found to provide tackification in many copolymer blends, the feedstock composition is important to obtain resins possessing requisite molecular weight and distribution, softening point and preferred color for a particular use. While the reaction conditions are also important, they may be varied somewhat.

The resin of this invention, having a softening point from 0°C to 30°, and preferably from 15°C upwards and a preferred color less than a Gardner color of 7 (determined in a 50/50 solution with toluene) and preferably less than 5, most preferably a Gardner color less than 2, is preferably formed from a feed containing a $C_8$ to $C_{10}$ vinyl aromatic hydrocarbon stream of a distillate fraction, suitably, a heart cut distillate stream from steam cracked aromatic hydrocarbons having a boiling point range of from 80°C to 260°C or, preferably pure, styrene monomer, substituted styrene monomers such as alpha-methyl styrene, or mixtures thereof. This stream is from 5% to 50% by weight of the polymerization feed, for pressure sensitive adhesive use preferably from 10% to 40% by weight of the polymerization feed.

Preferable ranges of the vinyl aromatic component depend largely upon the end use involved and the desired properties of the resins. As noted above, color depends, at least in part, on the purity of the

EP 0 234 856 B1

aromatic stream. Thus, preferred applications where light color is needed dictate that fewer impurities be present in the vinyl aromatic hydrocarbon stream even though the impurities are also hydrocarbons which act as a diluent in the reaction mixture and are removed after the resin is formed. When a resin having a softening point of from 15°C to 30°C and a Gardner color of 2 or less than 1 is desired, the preferred range of the vinyl aromatic component in the finished resin would be from 10 to 60 weight percent suitably the molecular weight distribution is from 1.15 to 1.25. The vinyl aromatic monomer content of the feed to achieve this aromatic content in the resin is from 5 to 50 parts by weight in the feed.

Optionally included as the second component is up to 35% by weight, preferably from 10% to 26% and most preferably from 12% to 16% by weight, of a piperylene concentrate resulting from the isolation of a fraction of steam cracked petroleum hydrocarbons which boils between 20°C to 140°C, said fraction containing diolefins being substantially below the nine carbon atom level. Preferably, piperylene concentrates have long been used in the preparation of resins along with the $C_5$ or $C_6$ olefins or diolefins, or mixtures thereof. Preferably, such fraction is heat soaked as is well known and described in U.S. Patent No. 4,391,961.

The piperylene concentrate hereinafter sometimes referred to as heat soaked piperylenes, when incorporated into the resin of this invention, imparts a lower color to the resulting resin. While the piperylene concentrate can be used without heat soaking to produce the low softening point resin, a heat soaking step improves color. Piperylene concentrates, as will be shown later, contain hydrocarbons which do not enter into the resin-forming reaction. The presence of unreactive materials normally do no harm to the resin and, during reaction, act as a diluent to be removed when the resin is recovered.

The other component of the resin feed stream is a chain transfer agent comprising a stream containing $C_4$ to $C_8$ monoolefin chain transfer agents of the general formula $RR'C=CR''R'''$ alkyl group. Useful chain transfer agents are, for example, isobutene, isoamylenes, isohexenes and diisobutenes. The isoamylenes particularly useful are described in U.S. Patent No. 4,514,554. These are usually concentrates, or mixtures, containing the various isomers desired from distillation cuts, well known to those skilled in the art, as well as mixtures made from pure compounds.

Particularly useful as the chain transfer agent to prepare the resin of the instant invention is the mixture containing isohexene isomers resulting from the dimerization of propylene in the well known "Dimersol" process using a nickel coordination complex and an aluminum alkyl as catalyst. The process can convert propylene to hexenes with selectivity in excess of 85%. The Dimersol (RTM) dimerization process has been referred to in various publications, e.g., see "How First Dimersol is Working" by Benedek et al., Hydrocarbon Processing, May 1980, page 143; also Chauvin et al., "The IFP Dimersol Process for the Dimerization of $C_3$ and $C_4$ Olefinic Cuts", Advances in Petrochemical Technology, presented at American Institute of Chemical Engineers, April 13, 1976, Kansas City, Missouri.

While it is known that the pure compounds and isomers making up the aforementioned $C_4$ to $C_8$ monoolefin chain transfer agent streams are useful chain transfer agents, it is within the scope of the present invention to use mixtures of isomers and reaction products containing such isomers, in the practice of this invention, with the isohexenes produced by the "Dimersol" dimerization process being preferred.

Hexenes, as produced by dimerization of propylene with transition metal catalyst, as in the Dimersol dimerization process, are characterized by being composed mainly of internal olefins, and a linear content which has a range from 20% up to 32% by weight. The main isomer present is a 2-methyl-2-pentene, along with other 2- and 4-methyl pentenes and 6% 2,3-dimethyl-2-butene. Some $C_9$ trimer, about 15% is also produced in the process. While it is not necessary to separate the $C_9$ trimer from the isohexene mix in the practice of this invention, it is preferred.

The chain transfer agent stream is present in the polymerization reaction mixture in an amount of from 25% to 70% by weight with 45% to 65% by weight being preferred depending upon the properties finally desired.

In carrying out the polymerization reaction, the hydrocarbon mixture is brought into contact with a Friedel Crafts catalyst such as $BF_3$, $BF_3$ etherates, $AlCl_3$, $CH_3CH_2AlCl_2$, or similar containing aluminum chloride or boron fluoride, with anhydrous aluminum chloride being preferred. Other Friedel Crafts catalysts may be used. The catalyst may be gaseous, liquid or solid. Generally, the catalyst is used in gaseous $BF_3$ or particulate $AlCl_3$ form having a particle size in the range of from 5 to 200 mesh size, although larger or smaller particles can be used. The amount of catalyst used ranges from 0.5% to 2.0% by weight, preferably 1.0% to 2.0% by weight. The catalyst may be added to the hydrocarbon mixture or the hydrocarbon mixture may be added to the catalyst. The reaction can be conducted continuously or by batch process techniques generally known to those skilled in the art.

The reaction should also be carried out at a pressure of from 10 psi (0.7 Kg/cm²) to 80 psi (56 Kg/cm²), preferably 20 (1.4 Kg/cm²), psi. The temperature of reaction ranges from 20°C to 100°C, more usefully

4

EP 0 234 856 B1

from 30°C to 60°C, and most preferably from 35°C to 50°C. The time of polymerization ranges from one-fourth to 2.0 hours, preferable from 20 minutes to 1 hour.

The reaction is conveniently carried out in the presence of a diluent because the reaction is usually exothermic and the resulting product is viscous. However, with adequate mixing and cooling, the temperature can be controlled and reaction conducted with only sufficient diluent to maintain good heat transfer for the heat of polymerization. The diluent may be introduced as an integral component of the feedstock streams when concentrates, reaction mixtures or distillation fractions are used, but various other diluents which are inert in that they do not enter into the polymerization reaction, may be separately added. Representative examples of inert diluents are aliphatic hydrocarbons such as pentane, hexane and heptane, aromatic hydrocarbons such a xylene, toluene and benzene, and unreacted residual hydrocarbons from the reaction may be useful as diluents.

After the polymerization is complete, the catalyst is quenched by well known means, usually by adding water and alcohol solution followed by resin recovery which involves stripping of unreacted hydrocarbons, including diluent from the resin as known by those skilled in preparing such resins. This "finishing" step is usually carried out by heating, in a nitrogen environment, usually up to 250°C, followed by steam stripping to remove unreacted material and low molecular weight oligomers ("fill"). The degree of stripping can be varied somewhat as desired to make small adjustments to the softening point.

The raffinate removed can be saved and used as the diluent for other polymerization reactions to form resins.

The resin obtained by the above-identified polymerization process using the feedstock herein described can have a wide variety of properties within the scope of the aforesaid parameters (they will still have light color and a low softening point between 0°C and 40°C) by varying feedstock selection. For example, if a Gardner color of 6 to 8 can be tolerated, then (1) the vinyl aromatic feed stream can be derived from a distillation cut boiling in the range of from 80°C to 260°C from a steam cracked aromatic hydrocarbon stream; and (2) a piperylene concentrate (C5 olefin and diolefin mixture) which is not heat soaked can be used. If slightly better color, i.e., Gardner 3 to 6 is desired, then a styrene concentrate, i.e., a distillation stream containing predominantly styrene and its various substituted styrene materials such as alpha-methylstyrene, para-methylstyrene or vinyl-toluenes may be used. Finally, if Gardner color less than 3 is desired, then it is preferred to use pure styrene or substituted styrene monomers, with styrene, alpha-methylstyrene or mixtures thereof being preferred. When these monomers or mixtures of pure monomers are used with a heat soaked piperylene concentrate, a preferred resin having a color of 2 or less on the Gardner scale, a molecular weight distribution of from 1.15 to 1.25 and a softening point of from 15°C to 30°C can be obtained. These are superior resins for use in adhesives. The resins of this invention can be readily blended with copolymers using well known methods to form adhesives and find great use as such.

The resins of this invention can be readily prepared from the foregoing description and the following examples. Those skilled in preparing adhesives from petroleum hydrocarbon resins will be able to incorporate same with copolymers. Accordingly, this invention is further described by the following examples which are offered by way of explanation and for the purposes of guiding those skilled in the art to the practice of this invention and the broadening of its usefulness and not for purposes of limitation thereof and it should not be so construed.

Examples 1-4

The liquid resins of Examples 1-4 were polymerized batchwise using aluminum chloride catalyst in a nitrogen atmosphere at about 12 psig (0.84 Kg/cm²). The aluminum chloride catalyst (having particle size between 5 and about 200 mesh) is added in anhydrous form. In these polymerizations, 400 grams of feed blend, in proportions indicated in Table 1, were pumped into a closed, stirred reactor containing catalyst, over a thirty minute period of time and then left in contact with the catalyst for an additional thirty minutes with stirring. A 400 gram 1:3 solution of isopropanol:water was added to the reaction mixture to quench the catalyst and the polymerizate was water washed two to three additional times with the aqueous phase being separated after each wash.

The polymerizate was finished by heating to 250°C in a nitrogen atmosphere to remove unreacted material. The polymerizate was then steam stripped at 250°C to produce the finished resin.

In Examples 1-4, the xylenes, styrene, p-methylstyrene, mixed methyl styrenes and alpha-methylstyrene components were of at least 96% purity. The compositions of the heat soaked piperylene concentrate and isoamylene concentrate used are shown below:

5

|  | Piperylene Concentrate | Isoamylene Concentrate |
|---|---|---|
| Pentene-1 (1) | 1.8 | 33.6 |
| Pentene-2 | 8.7 | 26.3 |
| 2 Methylbutene-1 | 0.1 | 29.6 |
| 2 Methylbutene-2 | 3.2 | 3.3 |
| Cyclopentene (1) | 12.2 | – |
| Pentadiene-1,3 | 19.9 | – |
| Low reactivity olefins and nonreactive paraffins | 54.1 | 7.2 |

(1) cis and trans isomers

These examples show the influence of aromatic olefin structure on resin properties. Resin properties are shown in Table 1 below:

TABLE 1

| Example | 1 | 2 | 3 | 4 |
|---|---|---|---|---|
| **Feed Composition** (part by weight) | | | | |
| Isoamylene Concentrate | 50 ------------------------------- | | | |
| Piperylene Concentrate | 21.4 ------------------------------- | | | |
| Styrene | 28.6 | - | - | - |
| P-Methylstyrene | - | 28.6 | - | - |
| Mixed Methylstyrenes | | | | |
|   – Meta-60% | - | - | 28.6 | - |
|   – Para-40% | | | | |
| Alpha-Methylstyrene | - | - | - | 28.6 |
| Xylenes | 42.9 ------------------------------- | | | |
| **Polymerization** | | | | |
| Catalyst, wt% | 1.4 ------------------------------- | | | |
| Reactor Temperature, °C | 45 ------------------------------- | | | |
| Reactor Pressure, Bar | 0.827 (12 psig) ------------ | | | |
| **Resin Finishing** | | | | |
| Resin Yield, wt% | 37.1 | 37.6 | 38.5 | 22.6 |
| **Resin Properties** | | | | |
| Softening Point, °C | 21 | 36 | 22.5 | 15 |
| Cloud Point, °C | | | | |
|   20/40/40 (a) | 70 ------------------------------- | | | |
| Gardner Color (b) | 3.5 | 3.5 | 4.5 | 6.5 |
| **GPC Molecular Weight** | | | | |
| Mn | 135 | 197 | 142 | 125 |
| Mw | 210 | 403 | 232 | 195 |
| Mw/Mn | 1.56 | 2.05 | 1.63 | 1.56 |

(a) The temperature at which there is an appearance of haze or "cloud" in a mix of 40 parts 60°C melt point paraffin wax, 20 parts of Escorene® 7750 (ethylene vinylacetate, 28% vinylacetate) from Exxon Chemical Company and 40 parts test resin heated to 200°C and allowed to cool in air with stirring.

(b) 50 wt% resin solution in toluene with comparator discs.

The ring and ball softening points of the resins were determined using a modified ASTM E-28 procedure. The softening point was measured in a 50/50 ethylene glycol/water solution. The rings were kept in a -25 to -30°C environment until the ethylene glycol/water solution was cooled to that temperature range. The ring and ball softening point apparatus was assembled and heated at 5°C/min. The softening point temperature was then read according to the ASTM E-28 procedure.

Examples 5-13

In Examples 5-13, a styrene concentrate fraction of steam cracked naphtha boiling within the range of from 80°C to 190°C was used with the isoamylene and piperylene concentrate to prepare resins in the manner described in Examples 1-4 above in proportions as set forth in Table 3. The compositions of the styrene concentrates are shown in Table 2 below:

## TABLE 2

### COMPOSITION OF STYRENE CONCENTRATES

| Component | I | II | III |
|---|---|---|---|
| Ethyl Benzene | 4.6 | 2.6 | 6.5 |
| o, m, p-Xylene | 30.3 | 24.8 | 40.5 |
| Styrene | 28.8 | 26.5 | 33.6 |
| Alpha-Methylstyrene | 3.0 | 4.3 | 1.2 |
| Vinyl Toluenes | 5.1 | 7.6 | 1.5 |
| Other Alkyl-substituted Benzenes | 28.2 | 34.2 | 16.7 |

These resins were polymerized and finished, and the softening points were determined using the same procedures discussed in Examples 1-4. These examples show the effect of varying feed blend ratios on resin properties. Note the high color and softening points of certain resins derived from the styrene concentrates.

Examples 10, 12 and 13 show the effect of styrene concentrate composition on resin properties.

## TABLE 3

| Example | 5 | 6 | 7 | 8 | 9 | 10 | 11 | 12 | 13 |
|---|---|---|---|---|---|---|---|---|---|
| **Feed Composition, parts by weight** | | | | | | | | | |
| Isoamylene Concentrate | 35 | 20 | 15 | – | 70 | 55 | 40 | 55 | 55 |
| Piperylene Concentrate | 15 | 30 | 15 | 30 | – | 15 | 30 | 15 | 15 |
| Styrene Concentrate I | 50 | 50 | 70 | 70 | 30 | 30 | 30 | – | – |
| Styrene Concentrate II | – | – | – | – | – | – | – | 30 | – |
| Styrene Concentrate III | – | – | – | – | – | – | – | – | 30 |
| **Polymerization** | | | | | | | | | |
| Catalyst, wt% | 1.4 | 2.0 | 2.0 | 1.4 | 1.4 | 2.0 | 1.4 | 1.4 | 1.0 |
| Reactor Temperature °C | 45 ———————————————————————————————————————— | | | | | | | | |
| Reactor Pressure, Bar | 0.827 (12 psig) ———————————————————————————— | | | | | | | | |
| **Resin Finishing** | | | | | | | | | |
| Resin Yield wt% | 29.1 | 31.2 | 33.2 | 29.8 | 13.6 | 21.4 | 24.8 | 29.3 | 29.5 |
| **Resin Properties** | | | | | | | | | |
| Softening Point, °C | 38 | 50 | 50 | 64 | 20 | 29 | 40 | 21 | 13 |
| Gardner Color | 10 | 10.5 | 11.5 | 11 | 12 | 10.5 | 8.5 | 10 | 6 |
| **GPC Molecular Weight** | | | | | | | | | |
| Mn | 175 | 167 | 141 | 156 | 194 | 183 | 200 | 304 | 280 |
| Mw | 344 | 349 | 361 | 419 | 287 | 333 | 304 | 432 | 372 |
| Mw/Mn | 1.97 | 2.09 | 2.56 | 2.69 | 1.48 | 1.82 | 1.52 | 1.42 | 1.33 |

Examples 14-20

In Examples 14-20, a mixed $C_6$ monoolefin stream prepared from the dimerization of propylene was used in place of isoamylene concentrate in resins produced as described in Examples 1-4 above. Typical compositions of the $C_6$ olefin stream and the piperylene concentrate used in these examples follow:

<u>Typical Composition of Mixed C$_6$ Olefin Stream, %*</u>

| | |
|---|---|
| 2-Methyl-1-Pentene | 3.9 |
| 2-Methyl-2-Pentene | 25.9 |
| 2,3-Dimethyl-1-Butene | 2.8 |
| 2,3-Dimethyl-2-Butene | 2.7 |
| Other C$_6$ Olefins | 50.5 |
| C$_9$ Olefins | 14.2 |

* "Dimate", from Diamond Shamrock, produced by dimerization of propylene.

<u>Typical Composition of Heat Soaked Piperylene Concentrate, %</u>

| | |
|---|---|
| 1-Pentene | 2.5 |
| Cis and trans-2-Pentene | 6.5 |
| 2-Methyl-1-Butene | 0.2 |
| 2-Methyl-2-Butene | 3.7 |
| Cyclopentene | 17.4 |
| Cis and trans-Piperylene | 28.8 |
| Low reactivity olefins and nonreactive paraffins | 40.9 |

In these Examples, pure styrene and alpha-methyl-styrene monomers were used as the vinyl aromatic hydrocarbon stream resulting in resins having an aromatic content from 10 weight percent to 60 weight percent and a Gardner color of 1. The feedstock composition and resin properties are shown in Table 4 below. These resins are particularly useful to prepare adhesives in the practice of this invention.

TABLE 4

| Example | 14 | 15 | 16 | 17 | 18 | 19 | 20 |
|---|---|---|---|---|---|---|---|
| **Feed Composition, Parts by wt.** | | | | | | | |
| $C_6$ Olefins ("Dimate") | 69.4 | 36.5 | 59.5 | 59.5 | 50.8 | 66 | 43.9 |
| Piperylene Concentrate (1) | 25.2 | 13.7 | 22.5 | 22.5 | 19 | 24 | 16.4 |
| Styrene | 3.6 | 32.6 | 12 | 18 | 25.4 | 6.7 | 32.9 |
| Alpha-Methylstyrene | 1.8 | 17.1 | 6 | ~ | 4.8 | 3.3 | 6.8 |
| Paraffinic Diluent | – | 46.2 | 49.2 | – | 58.7 | – | 37.0 |
| **Polymerization** | | | | | | | |
| Catalyst, wt% | 1.2 | 1.2 | 1.2 | 1.2 | 1.2 | 1.2 | 1.5 |
| Reactor Temperature, °C | 40 | 40 | 40 | 40 | 40 | 40 | 40 |
| Reactor Pressure, Bar | 0.689 | 0.689 | 0.689 | 0.689 | 0.689 | 0.689 | 0.689 |
| | (10 psig) | (10 psig) | (10 psig) | (10 psig) | (10 psig) | (10 psig) | (10 psig) |
| **Resin Finishing** | | | | | | | |
| Resin Yield, wt% | 24 | 50 | 30 | 37 | 36 | 28.3 | 46.3 |
| Fill, wt% | 1 | – | 4 | 4 | 4 | 7.1 | 4.3 |
| **Resin Properties** | | | | | | | |
| Softening Point, °C | 20 | 21 | 17 | 23.5 | 24 | 23.5 | 29 |
| Cloud Point, °C | 66 | 65 | 65 | 65 | 69 | 65 | 65 |
| Gardner Color | 1+ | 1+ | 1+ | 1+ | 1+ | 1– | 1– |
| Vinyl Aromatic Content, wt% | 12 | 59 | 34 | – | 45 | 25 | 51 |
| **GPC Molecular Weight** | | | | | | | |
| Mn | 426 | 362 | 445 | 396 | 472 | 399 | 406 |
| Mw | 521 | 443 | 522 | 453 | 578 | 467 | 499 |
| Mw/Mn | 1.22 | 1.22 | 1.17 | 1.14 | 1.22 | 1.17 | 1.23 |

(1) Heat soaked

Examples 21-23

In These examples, the mixed $C_6$ monoolefin stream prepared from the dimerization of propylene has used again in the monomer described for the examples above. However, in Example 21 no piperylene was used; in Example 22 an ethyl aluminum dichloride catalyst was used; and in Example 23 a $BF_3$ $O(CH_2CH_3)_2$ (etherate) catalyst was used for Friedel Crafts polymerization. The feedstock composition and resin properties are shown in Table 4A below.

11

## TABLE 4A

| Example | 21 | 22 | 23 |
|---|---|---|---|
| **Feed Composition, Parts by wt.** | | | |
| $C_6$ Olefins ("Dimate") | 25.0 | 59.5 | 56.3 |
| Piperylene Concentrate (1) | – | 22.5 | 22.0 |
| Styrene | 24.0 | 12.0 | 21.7 |
| Alpha-Methylstyrene | 11.0 | 6.0 | – |
| Paraffinic Diluent | 40.0 | – | – |
| **Polymerization** | | | |
| Catalyst, wt% | 1.2 | 1.2 | 1.0 |
| Reactor Temperature, °C | 40 | 40 | 40 |
| Reactor Pressure, 0.689 Bar, 10 psig | ———————— | | |
| **Resin Finishing** | | | |
| Resin Yield, wt% | 47.0 | 41.4 | 30.5 |
| Fill, wt% | 7.9 | 2.7 | 12.9 |
| **Resin Properties** | | | |
| Softening Point, °C | 18 | 21.5 | 18 |
| Cloud Point, °C | 65 | 65 | 65 |
| Gardner Color | 1+ | 4+ | 1– |
| Vinyl Aromatic Content, wt% | 64 | 34 | 50 |
| **GPC Molecular Weight** | | | |
| Mn | 355 | 392 | 290 |
| Mw | 434 | 479 | 407 |
| Mw/Mn | 1.22 | 1.22 | 1.4 |

(1) Heat soaked

Examples 24-26

In Examples 24-26, a heart cut distillate (80°C to 260°C) derived from steam cracked naphtha was used in place of the pure vinyl aromatic monomers in resins produced as described in Examples 1-4 above. A typical composition of this heart cut distillate is shown below.

Typical Composition of Heart Cut Distillates; wt%

| | |
|---|---|
| Styrene | 7.2 |
| Vinyl Toluenes | 13.9 |
| Alpha-Methyl styrene | 3.8 |
| Beta-Methyl styrene | 3.1 |
| Indene | 12.1 |
| Non reactive Aromatics and Alkyl substituted Aromatics | 59.9 |

The feedstock compositions and resin properties are shown in Table 5 below:

TABLE 5

Example

| Feed Composition (parts by weight) | 24 | 25 | 26 |
|---|---|---|---|
| $C_6$ Olefins | 55 | 45 | 58.8 |
| Piperylene Concentrate (1) | 15 | 10 | 23.5 |
| Heart Cut Distillate | 30 | 45 | 17.6 |

Polymerization

| | | | |
|---|---|---|---|
| Catalyst, wt% | 1.4 | 1.4 | 1.2 |
| Reactor Temperature, °C | 40 | 40 | 40 |
| Reactor Pressure, 0.689 Bar (10 psig) | ———————————————— | | |

Resin Finishing

| | | | |
|---|---|---|---|
| Resin Yield, wt% | 40.7 | 46.6 | 29.6 |
| Fill, wt% | - | - | 7.6 |

Resin Properties

| | | | |
|---|---|---|---|
| Softening Point, °C | 23 | 26 | 21 |
| Cloud Point, °C | 66 | 65 | 65 |
| Gardner Color | 6+ | 7 | 4+ |
| Vinyl Aromatic Content, wt% | 37 | 49 | 22 |

GPC Molecular Weight

| | | | |
|---|---|---|---|
| Mn | 504 | 428 | 423 |
| Mw | 705 | 571 | 518 |
| Mw/Mn | 1.40 | 1.35 | 1.22 |

(1) Heat Soaked

Better color (i.e., a lower Gardner number) could be achieved in the above formulation if the heart cut distillate were acid treated using known methods.

Examples 27 and 28

13

In the manner described in Examples 1-4, Examples 27 and 28 demonstrate the use of diisobutene and an isoamylene concentrate to prepare resins within the scope of the invention. The resin of Example 27 was stripped excessively, resulting in a softening point of 41°C. If excessive stripping had not occurred, the softening point would have been 40°C or less with a Gardner color of about 2 also resulting. The results of these experiments are shown in Table 6:

## TABLE 6

| Example<br>Feed Composition, Parts by wt. | 27 | 28 |
|---|---|---|
| Styrene | 16.3 | 12.0 |
| Alpha-Methylstyrene | 8.2 | 6.0 |
| Heat Soaked piperylenes | 30.6 | 22.5 |
| Diisobutene | 44.9 | – |
| Isoamylene | – | 59.5 |
| Diluent | 104.1 | 27.2 |

**Polymerization**

| | 27 | 28 |
|---|---|---|
| Catalyst, wt% | 1.2 | 1.2 |
| Reactor Temperature, °C | 40 | 40 |
| Reactor Pressure, 0.689 Bar (10 psig) | ——————————— | |

**Resin Finishing**

| | 27 | 28 |
|---|---|---|
| Resin Yield, wt% | 27.4 | 44.3 |
| Fill, wt% | 12.0 | – |

**Resin Properties**

| | 27 | 28 |
|---|---|---|
| Softening Point, °C | 41 | 10 |
| Cloud Point, °C | 65 | 65 |
| Gardner Color | 4+ | 1 |

**Resin Molecular Weight, GPC**

| | 27 | 28 |
|---|---|---|
| Mn | 519 | 356 |
| Mw | 619 | 400 |
| Mw/Mn | 1.19 | 1.12 |

The low softening point liquid resins described above are all applicable in the practice of the instant invention to make adhesives when combined with a copolymer. The copolymers useful for the practice of this invention are generally known as, for example, styrene/isoprene/styrene (SIS), polyethylene vinyl acetate (EVA) (from 25% to 45% by weight vinyl acetate), styrene/butadiene (SB) and styrene polyethylene polybutadiene styrene (SEBS), and the like. Of particular interest are the styrene/butadiene copolymers which are classically more difficult to tackify than other polymers using a resin and often require not only a tackifier but an oil to act as a plasticizer thus giving rise to the problem of "bleed" and/or "creep" when the adhesive is applied to a paper or polymer substrate. When the need is for a light color, essentially water white resin, previously only resins prepared from nonaromatic materials were available since aromaticity had heretofore imparted color to the resin which was unacceptable for certain applications, including premium packaging and disposable diapers. The presence of an oil in the adhesive composition has other detrimental effects such as unacceptable creep and bond release along a polyethylene film, particularly in a case where disposable diapers are involved. Thus, the resins described above, particularly those of Examples 8-14 which can be used with styrene/butadiene resins in a binary system, i.e., by eliminating the plasticizer, are particularly useful.

Well known styrene/butadiene copolymers useful in the practice of this invention are those sold by Shell under the "Kraton" trademark and by Firestone under the "Stereon" trademark. Both of these are styrene/butadiene copolymers which form particularly attractive adhesives when used in combination with the above-identified resins, particularly the very low color resins of Examples 8-14 having a softening point of around 20° C. The "Stereon" copolymer grade 840A is a copolymer containing 42% styrene. In formulating the adhesive, the liquid resin is present in amounts from 20% to 80% by weight with the copolymer which is present in, correspondingly, 80% to 20%. The preferred adhesive would contain from 30% to 70% by weight of the resins with from 35% to 50% by weight in the adhesive being especially preferred. In binary adhesives, the copolymer will be present in corresponding amounts. However, other components may be present. Optionally, a resin having a higher softening point, from 80° C to 120° C, may be used as an additional component of the adhesive composition. While the preferred adhesive is a binary system comprising two reactants, the copolymer and the light color resins described herein, such binary system may still include such nonreactive ingredients as up to 50% by weight of fillers and inhibitors. Representative of fillers would be, for example, calcium carbonate, titanium oxides, finely divided clays, talc and the like. The high softening point resin may be an aliphatic, aliphatic/aromatic, terpenic, terpenic/aliphatic, terpenic/aromatic, rosin ester or a hydrogenated product thereof.

Once blended using methods and techniques well known to those skilled in the art, the adhesive would be coated on a substrate such as "Mylar" film (Dupont Company) or "Endura" film ( Akrosil). The adhesive is then evaluated in terms of those parameters important to adhesives such as rolling ball tack, polyken tack, peel strength, holding power and aged retention of these properties.

The adhesive compositions of the present invention may be applied to a substrate and, if solvent coated, dried using conventional procedures. The substrate used depends upon the anticipated use, but it is usually relatively thin material, usually no greater than about 3.2 mm in thickness, and in the manufacture of tapes and labels, the substrate is a relatively thin sheet material. The sheet material may be a polymeric material which is flexible at about room temperature. The sheet material may be a homo-polymer of an ethylenically unsaturated monomer such as ethylene, propylene or vinyl chloride, or be polyester, polyacetate or polyamide provided it has sufficient flexibility for the desired end use. Alternatively, the substrate may be made from cellulosic or reconstituted cellulosic material such as rayon. The substrate need not be a sheet material but may be composed of fibers which may be woven, or nonwoven as is the case in paper. Woven substrates may be made from cellulosic material, such as cotton or from fibers of any of the above mentioned polymers.

The composition is applied to the substrate using conventional coating techniques such as roller coaters, blade coaters, meyer rods or air coaters. The coated substrate can be dried usually by passing it through a heating tunnel or oven through which may be circulating hot air or the tunnel or oven may contain infrared lamps to dry the coated substrate. The drying time will be a function of a number of factors such as the heat capacity of the substrate, the type of heating, the oven temperature, air velocities (if circulating air is used) and the rate of passage of the substrate through the heater.

The substrate should be coated with sufficient composition to provide a dry coat weight from 16 to 57 $g/cm^2$. Generally in the manufacture of tapes using a continuous sheet polymeric substrate, a dry coat weight of 15-30 $g/cm^2$ is used. In the manufacture of labels, a dry coat weight from 15 to 30 $g/cm^2$ is usually used. In the manufacture of masking tape, a dry coat weight from 35 to 65 $g/cm^2$ is usually used.

After drying, the coated substrate is cut to the required dimension. In the manufacture of tape, the substrate is cut into strips and rolled to provide a finished product. The substrate may also be cut into shaped items to provide labels or medicinal tapes.

One particularly attractive use for the pressure sensitive adhesives of the present invention is in diaper tabs suitably from 0.01778 mm to 0.0381 mm thick for disposable diapers, particularly repositional tabs which employ a "Mylar" polymer substrate coated as stated above with 0.0381 mm (1.5 mil) adhesive as shown in Table 7 below.

## TABLE 7

### Adhesion Testing of Commercial Disposable Diaper Tabs

| Product | Commercial Tab "1" | Commercial Tab "2" |
|---|---|---|
| **Polyken Tack (g)** | | |
| Initial | 291 | 407 |
| Aged (2) | 451 | 487 |
| **180° Peel Strength** $\left(\frac{0.453 \text{ kg}}{25.4 \text{ mm}}\right)$ **Stainless Steel** | | |
| Initial | 6.28 | 5.75 |
| Aged (2) | 6.00 | 2.25 |
| **Polyethylene (3)** | | |
| Initial | 1.63 | 1.63 |
| Aged (2) | 1.40 | 0.80 |
| **Repeat Polyethylene (4)** | | |
| Initial | 1.67 | SF (6) |
| Aged (2) | 1.50 | 1.23 |
| **Loop Tack (0.453 kg per 25.4 mm) Stainless Steel** | | |
| Initial | 3.42 | 2.42 |
| Aged (2) | 0.75 | 2.00 |
| **178° Holding Power (5) Stainless Steel** | | |
| Initial | 2.61 | 14.99 |
| Aged (2) | 0.26 | 13.11 |

(1) 0.0381 mm (1.5 mil) drawdown on 0.01 g/cm$^2$ backing
(2) Aging Conditions: 2 weeks at 70°C (158°F)
(3) 0.254 mm (10 mil) polyethylene film (from Tab "1")
(4) 2 hours at room temperature
(5) 12.7 mm x 12.7 mm, 1kg
(6) Substrate Failure

The mechanical preparation of the adhesives of this invention are well known to those skilled in the art. In addition to the components which make up the adhesives of this invention, i.e., the copolymers and the low softening, light color resin described above, other materials, well known to those skilled in the art may be added without departing from the invention such as, for example, fillers or resins having higher melting points such as, for example, from 80°C to 120°C in order to impart additional strength to the resulting pressure sensitive adhesive. In some applications, it may be desirable to add up to 60 weight percent of such "hard" resin such as that described in U.S. Patent No. 4,514,554 for example, and U.S. Patent No. 4,391,961. Both provide often desirable modifications of the pressure sensitive adhesive of this invention.

Preferred adhesives made with a styrene/butadiene copolymer having from 40% to 50% styrene are preferred. In use, the adhesives are applied to a polyacetate or cellulose backing in a thickness of from 0.01778 mm to 0.0381 mm (0.7 to 1.5 mil). To illustrate the present invention, adhesives were made by mixing a styrene/butadiene copolymer having 42% styrene polymer ("Stereon" Resins from Firestone) with resins similar to, and prepared in the same manner as, those of Examples 16 and 18 and commercially available resins useful to produce adhesives with such styrene/butadiene copolymer. The characteristics of the liquid resins compared are set forth in Table 8.

## TABLE 8

### Comparison of Liquid Resins with Styrene/Butadiene Copolymer (Stereon® 840A)

| | Exp 16 (34% Aromatic) | Exp 18 (45% Aromatic) | Regalrez 108 (Hercules) | Hercolyn D (Hercules) | Zonarez A-25 (Arizona) | Wingtack 10 (Goodyear) |
|---|---|---|---|---|---|---|
| Type | Aromatic/ Aliphatic | Aromatic/ Aliphatic | Hydrogenated Aromatic | Rosin Ester | Terpene/ Oil | Aliphatic |
| Softening Point (°C) | 22 | 24 | 17 | 0 | 20 | 8.5 |
| Cloud Point (1) | 97 | 100 | 100 | 98 | 97 | 109 |
| Viscosity (cps) | | | | | | |
| 37.78°C | 22950 | 24000 | 17750 | 895 | 20100 | 5713 |
| 93.3 °C | 99 | 123 | 83 | 19 | 67 | 58 |
| Gardner Color (2) | | | | | | |
| Initial | 2- | 1.5 | 1 | 2+ | 2+ | 1 |
| Aged (16 h/148°C) | 4+(3) | 5-(3) | 2- | 11 | 13- | 9+ |
| Mw | 577 | 518 | 383 | 252 (bimodal) | 416 (trimodal) | 623 |
| Mn | 492 | 518 | 346 | 235 | 346 | 531 |
| Mw/Mn | 1.17 | 1.17 | 1.11 | 1.07 | 1.20 | 1.17 |
| Volatility (wt% loss) | | | | | | |
| 10g/5 Hr/ 177°C (4) | 6-7 | 6-7 | 11.3 | 20 | 18.1 | 14.1 |

(1) Multiwax 195 (microcrystalline wax – M.P. 90.5°C) – 33 wt%; Elvax 150 (wax – M.P. 150°F) – 27; Resin – 40.
(2) 50% in toluene.
(3) Inhibited with Irganox 1010 at 0.15 wt%.
(4) 76.2 mm diameter aluminum dish.

These resins as shown are used in preparing a repositional diaper tab in varying proportions of resin to copolymer in the manner of mixing well known to those skilled in the art. The adhesive was applied in the amount of 0.0381 mm (1.5 mil) drawdown on 0.005 g/cm² "Mylar" polyacetate film backing. The test results are as shown in Table 9 and Table 10.

TABLE 9

LIQUID RESINS COMPARISONS
PERFORMANCE IN STEREON 840A COPOLYMER
REPOSITIONABLE DIAPER TABS

Aging Conditions: 2 weeks at 70°C
1.5 ml drawdown on .005 $g/cm^2$ mylar backing

| | Formulation (1) wt% | | Rolling Ball Tack cm | | Polyken Tack g | | Loop Tack* SS | | 178° Holding Power hr SS 12.7 mm x 12.7 mm 1kg | |
|---|---|---|---|---|---|---|---|---|---|---|
| | Copolymer | Resin | Initial | Aged | Initial | Aged | Initial | Aged | Initial | Aged |
| Resin of | 80 | 20 | 30.0 | 30.0 | 10 | 10 | .01 | .01 | 100.0 | 0.0 |
| Example 16 | 65 | 35 | 7.2 | 8.8 | 174 | 237 | 0.13 | 0.12 | 100.0 | 100.0 |
| | 50 | 50 | 3.1 | 2.0 | 812 | 718 | 0.85 | 0.72 | 100.0 | 2.6 |
| | 35 | 65 | 2.7 | 2.3 | 997 | 1000 | 3.41 | 1.08 | 2.6 | 0.3 |
| | 20 | 80 | 2.4 | 2.3 | 1357 | 1192 | 3.29 | 2.90 | 0.4 | 0.3 |
| Zonarez | 80 | 20 | 30.0 | 30.0 | 10 | 10 | .01 | .01 | 100.0 | 0.0 |
| A-25 | 65 | 35 | 4.7 | 12.7 | 262 | 205 | 0.15 | 0.17 | 100.0 | 100.0 |
| | 50 | 50 | 3.1 | 3.3 | 659 | 468 | 0.27 | 0.62 | 100.0 | 3.4 |
| | 35 | 65 | 2.5 | 2.1 | 721 | 602 | 0.55 | 0.95 | 0.9 | 0.4 |
| | 20 | 80 | 2.3 | 2.7 | 843 | 736 | 1.20 | 0.62 | 0.2 | 0.2 |
| Regalrez | 80 | 20 | 30.0 | 30.0 | 71 | 10 | .01 | .01 | 100.0 | 0.0 |
| 1018 | 65 | 35 | 5.6 | 9.4 | 457 | 198 | 0.50 | 0.16 | 100.0 | 100.0 |
| | 50 | 50 | 3.2 | 2.8 | 948 | 685 | 1.08 | 0.93 | 100.0 | 2.6 |
| | 35 | 65 | 2.5 | 2.2 | 1009 | 1017 | 1.43 | 1.50 | 0.6 | 0.5 |
| | 20 | 80 | 1.7 | 2.6 | 1103 | 940 | 3.29 | 1.95 | 0.5 | 0.5 |

* 0.453 kg per 25.4 mm

To further demonstrate the advantages of this invention, a pressure sensitive adhesive is described below using the above described liquid resin, the styrene/butadiene copolymer, and a commercially available inhibitor. The 20 °C softening point liquid resin is similar to the one described in Examples 10 and 12 with the properties as shown in Table 8.

## TABLE 9 continued
### LIQUID RESINS COMPARISONS
### PERFORMANCE IN STEREON 840A COPOLYMER
### REPOSITIONABLE DIAPER TABS

Aging Conditions: 2 weeks at 70°C
1.5 ml drawdown on .005 g/cm² mylar backing

| Formulation (1) wt% Copolymer Resin | | 180° Peel Strength (0.453 kg per 25.4 mm) (2 wks, 60°C) | | | | | | Staining |
|---|---|---|---|---|---|---|---|---|
| | | Stainless Steel (SS) | | Polyethylene (2) | | Repeat Polyethylene | | |
| | | | | | | 2 hrs | | |
| | | Initial | Aged | Initial | Aged | Initial | Aged | |
| Resins of | 80 | 20 | 0.63 | 0.00 | 0.00 | 0.00 | | | |
| Example 16 | 65 | 35 | 0.30 | 0.08 | 0.00 | 0.00 | | | |
| | 50 | 50 | 2.40 | 1.80 | 0.68 | 0.23 | 0.70 | 0.24 | None |
| | 35 | 65 | 2.82 | 2.02 | 0.95 | 0.72 | 0.98 | 0.70 | Slight |
| | 20 | 80 | 7.47 | 7.38 | SF (3) | 1.65 | | SF | |
| Zonarez | 80 | 20 | 0.00 | 0.00 | 0 00 | 0 00 | | | |
| A25 | 65 | 35 | 0.32 | 0.00 | 0.00 | 0.00 | | | |
| | 50 | 50 | 1.15 | 0.48 | 0.30 | 0.00 | 0.70 | | None |
| | 35 | 65 | 1.45 | 0.77 | 0.50 | 0.00 | 0.80 | | Heavy |
| | 20 | 80 | 3.19 | 1.33 | SF | 0.25 | | 0.35 | |
| Regalrez | 80 | 20 | 0.17 | 0.00 | 0.00 | 0.00 | | | |
| 1018 | 65 | 35 | 1.18 | 0.17 | 0.00 | 0.00 | | | |
| | 50 | 50 | 1.92 | 1.53 | 0.65 | 0.25 | 0.58 | 0.15 | None |
| | 35 | 65 | 2.58 | 1.88 | 0.93 | 0.77 | 1.50 | 0.80 | Slight |
| | 20 | 80 | 6.18 | 4.83 | SF | 0.70 | | SF | |

(1) Includes 0.5 wt% Irganox 1010
(2) 1 ml thick polyethylene (PE) film from Commercial Tab "1"
(3) Substrate Failure

19

## TABLE 10

### REMOVABLE PRESSURE SENSITIVE ADHESIVES

| | | |
|---|---|---|
| Liquid Resin from Examples 16 and 18 | 60 | 67 |
| Stereon® 840A styrene-butadiene copolymer (42% Styrene) | 40 | 33 |
| Irganox® 1010 inhibitor | 0.5 | 0.5 |

| | Initial | Aged | Initial | Aged |
|---|---|---|---|---|
| Rolling Ball Tack (cm) | 3.0 | 3.5 | 2.8 | 3.1 |
| Polyken Tack (g) | 664 | 491 | 770 | 521 |
| 180° Peel Strength* | | | | |
| to SS | 1.48 | 1.07 | 1.44 | 1.79 |
| to PE (10 ml, untreated) | 1.00 | 0.42 | 1.15 | 1.13 |
| Loop Tack* | | | | |
| to SS | 0.35 | 0.35 | 0.66 | 0.75 |
| To PE (10 ml, untreated) | 0.60 | 0.68 | 0.28 | 0.56 |
| SAFT to SS (°F) | 55.5 | 50.5 | 50.5 | 52.2 |
| 178° Holding Power (hrs) (12.7 mm x 12.7 mm x 2,000 g) | 9.5 | 27.9 | 3.9 | 3.7 |

* 0.453 kg per 25.4 mm

As seen from the foregoing, the pressure sensitive adhesive of the present invention provides considerable advantage over other pressure sensitive adhesives made with available liquid resins.

The foregoing disclosure and description of the invention are illustrative and explanatory thereof, and various changes in the components, parameters and proportions, as well as in the details of the illustrated examples, may be made without departing from the spirit and scope of the claimed invention.

**Claims**

1. A hydrocarbon resin having a softening point of from 0 to 30°C obtainable by Friedel Crafts polymerization of a hydrocarbon feed comprising :
   (a) from 5% to 75% by weight of the feed of a $C_8$ to $C_{10}$ vinyl aromatic hydrocarbon stream;

(b) up to 35% by weight of the feed of a piperylene stream; and

(c) from 25% to 70% by weight of the feed of a stream containing $C_4$ to $C_8$ monoolefin chain transfer agent of the formula $RR'C = R''R'''$ where R and R' are $C_1$ to $C_5$ alkyl, R'' and R''' are independently selected from H and a $C_1$ to $C_4$ alkyl group.

2. A resin according to claim 1 in which the amount of (c) and polymerization conditions for preparing the resin are selected so as give a number average molecular weight after finishing of from 100 to 600.

3. A resin according to claim 1 or claim 2 wherein the $C_8$ to $C_{10}$ vinyl aromatic hydrocarbon stream is a distillate fraction from steam cracked aromatic hydrocarbon having a boiling point range of from 80°C to 260°C or a styrene, alpha-methyl styrene or mixture thereof.

4. The resin according to any of the preceding claims wherein the piperylene stream is present in the hydrocarbon feed in amounts of above 10% and less than 26% by weight.

5. The resin according to any of the preceding claims wherein the piperylene stream is a heat soaked piperylene.

6. The resin according to any of the preceding claims wherein the chain transfer agent stream is present in amounts of from 45% to 65% by weight.

7. The resin according to any of the preceding claims wherein the chain transfer agent stream is a mixture of $C_6$ isomers produced by the dimerization of propylene.

8. The resin according to any of the preceding claims wherein the hydrocarbon feed comprises :
   (a) from 5 to 50 parts by weight of styrene, alpha-methyl styrene or mixtures thereof;
   (b) from 10 to 26 parts by weight of a heat soaked piperylene stream; and
   (c) from 25 to 70 parts by weight of a mixed $C_6$ olefin stream produced by dimerization of propylene.

9. A resin according to claim 8 having a softening point of at least 10°C, a Gardner color of 2 or less and a molecular weight distribution of from 1.1 to 1.3 with a number average molecular weight of from 350 to 500.

10. A resin according to any of claims 1 to 7 obtainable from a feed stream including a vinyl aromatic component of pure styrene or substituted styrene monomer or mixtures thereof in an amount of from 10 to 60% by weight wherein said resin has a color of a Gardner 2 or less preferably of about 1, a softening point of from 15°C upwards and a molecular weight distribution of from 1.15 to 1.25.

11. The use of a resin according to any of the preceding claims as an adhesive tackifier.

12. An adhesive composition comprising from 20% to 80% by weight of a copolymer styrene/isoprene/styrene, polyethylene vinyl acetate, styrene/butadiene or styrene polyethylene polybutadiene styrene and from 80% to 20% by weight of a tackifying hydrocarbon resin according to any of claims 2 to 8 having a Gardner color of less than 7.

13. An adhesive according to claim 12 wherein the adhesive comprises from 35% to 50% by weight of the resin and a styrene/butadiene copolymer.

14. An adhesive according to claims 12 or 13 which also comprises up to 60 wt% of a high softening point resin having a softening point of from 80°C to 120°C.

15. An adhesive according to claim 14 wherein said high softening point resin is aliphatic, aliphatic/aromatic, terpenic, terpenic/aliphatic, terpenic/aromatic, rosin ester, or a hydrogenated product thereof.

16. An adhesive according to any of claims 12 to 15 which also includes up to 50% by weight of an inert filler.

21

17. A repositional diaper tab for use with a baby diaper having a polyethylene outer surface which comprises a tab substrate made of a polymeric or cellulosic film and from 0.01778 mm to 0.0381 mm (0.7 mil to 1.5 mil) of an adhesive which comprises from 40% to 65% by weight of a copolymer of styrene and butadiene having from 40% to 50% by weight styrene monomer; and from 50% to 30% of a hydrocarbon resin according to any of claims 1 to 8, wherein said resin has a color of a Gardner 3 or less.

**Revendications**

1. Résine hydrocarbonée ayant un point de ramollissement de 0 à 30°C, pouvant être obtenue par polymérisation de Friedel-Crafts d'une charge hydrocarbonée comprenant :

(a) 5 % à 75 % en poids de la charge d'un courant d'hydrocarbure vinyl-aromatique en $C_8$ à $C_{10}$ ;

(b) jusqu'à 35 % en poids de la charge d'un courant de pipérylène ; et

(c) 25 % à 70 % en poids de la charge d'un courant contenant un agent de transfert de chaîne du type mono-oléfine en $C_4$ à $C_8$ répondant à la formule $RR'C = R''R'''$ dans laquelle R et R' représentent des groupes alkyle en $C_1$ à $C_5$, R'' et R''' sont choisis, indépendamment, entre H et un groupe alkyle en $C_1$ à $C_4$.

2. Résine suivant la revendication 1, dans laquelle la quantité de constituant (c) et les conditions de polymérisation pour la préparation de la résine sont choisies de manière à convenir à une moyenne numérique du poids moléculaire, après finissage, de 100 à 600.

3. Résine suivant la revendication 1 ou la revendication 2, dans laquelle le courant d'hydrocarbure vinyl-aromatique en $C_8$ à $C_{10}$ est une fraction de distillat provenant d'un hydrocarbure aromatique ayant subi un craquage à la vapeur d'eau, ayant un point d'ébullition compris dans l'intervalle de 80°C à 260°C, ou bien un styrène, un alpha-méthylstyrène ou leur mélange.

4. Résine suivant l'une quelconque des revendications précédentes, dans laquelle le courant de pipérylène est présent dans la charge hydrocarbonée en des quantités supérieures à 10 % et inférieures à 26 % en poids.

5. Résine suivant l'une quelconque des revendications précédentes, dans laquelle le courant de pipérylène est un pipérylène ayant subi une maturation à chaud.

6. Résine suivant l'une quelconque des revendications précédentes, dans laquelle le courant d'agent de transfert de chaîne est présent en des quantités de 45 % à 65 % en poids.

7. Résine suivant l'une quelconque des revendications précédentes, dans laquelle le courant d'agent de transfert de chaîne est un mélange d'isomères en $C_6$ produit par dimérisation du propylène.

8. Résine suivant l'une quelconque des revendications précédentes, dans laquelle la charge hydrocarbonée comprend :

(a) 5 à 50 parties en poids de styrène, d'alpha-méthylstyrène ou d'un de leurs mélanges ;

(b) 10 à 26 parties en poids d'un courant de pipérylène ayant subi une maturation à chaud ; et

(c) 25 à 70 parties en poids d'un courant d'oléfines mixtes en $C_6$ produit par dimérisation du propylène.

9. Résine suivant la revendication 8, ayant un point de ramollissement d'au moins 10°C, une couleur Gardner égale ou inférieure à 2 et une distribution des poids moléculaires de 1,1 à 1,3, avec une moyenne numérique du poids moléculaire de 350 à 500.

10. Résine suivant l'une quelconque des revendications 1 à 7, pouvant être obtenue à partir d'un courant de charge d'alimentation comprenant un constituant vinyl-aromatique consistant en un monomère styrène ou styrène substitué pur ou un de leurs mélanges en une quantité de 10 à 60 % en poids, ladite résine ayant une couleur Gardner égale ou inférieure à 2, de préférence approximativement égale à 1, un point de ramollissement égal ou supérieur à 15°C et une distribution des poids moléculaires de 1,15 à 1,25.

EP 0 234 856 B1

11. Utilisation d'une résine suivant l'une quelconque des revendications précédentes comme agent d'adhésivité pour adhésifs.

12. Composition adhésive comprenant 20 % à 80 % en poids d'un copolymère styrène/isoprène/styrène, polyéthylène/acétate de vinyle, styrène/butadiène ou styrène/polyéthylène/polybutadiène/styrène et 80 % à 20 % en poids d'une résine hydrocarbonée, servant d'agent d'adhésivité, suivant l'une quelconque des revendications 2 à 8, ayant une couleur Gardner inférieure à 7.

13. Adhésif suivant la revendication 12, qui comprend 35 % à 50 % en poids de la résine et un copolymère styrène/butadiène.

14. Adhésif suivant la revendication 12 ou 13, qui comprend également jusqu'à 60 % en poids d'une résine à haut point de ramollissement, ayant un point de ramollissement de 80°C à 120°C.

15. Adhésif suivant la revendication 14, dans lequel la résine à haut point de ramollissement est une résine aliphatique, aliphatique/aromatique, terpénique, terpénique/aliphatique, terpénique/aromatique, un ester de colophane ou un de leurs produits hydrogénés.

16. Adhésif suivant l'une quelconque des revendications 12 à 15, qui comprend également jusqu'à 50 % en poids d'une charge inerte.

17. Patte repositionnable pour couches, destinée à être utilisée avec une couche pour bébés, ayant une surface extérieure en polyéthylène qui comprend un substrat de patte constitué d'un film polymérique ou cellulosique et de 0,01178 mm à 0,0381 mm (0,7 mil à 1,5 mil) d'un adhésif qui comprend 40 % à 65 % en poids d'un copolymère de styrène et de butadiène renfermant 40 % à 50 % en poids de monomère styrène ; et 50 % à 30 % d'une résine hydrocarbonée suivant l'une quelconque des revendications 1 à 8, dans laquelle ladite résine possède une couleur Gardner égale ou inférieure à 3.

## Patentansprüche

1. Kohlenwasserstoffharz mit einem Erweichungspunkt von 0 bis 30°C erhältlich durch Friedel Crafts-Polymerisation eines Kohlenwasserstoffeinsatzmaterials, das:

(a) 5 bis 75 Gew.%, bezogen auf das Einsatsmaterial, eines vinylgruppenhaltigen, aromatischen $C_8$-$C_{10}$-Kohlenwasserstoffstroms,

(b) bis zu 35 Gew.%, bezogen auf das Einsatzmaterial, eines Piperylenstroms und

(c) 25 bis 70 Gew.%, bezogen auf das Einsatzmaterial, eines Stroms umfaßt, der monoolefinisches $C_4$-$C_8$-Kettenübertragungsmittel mit der Formel $RR'C = R''R'''$ enthält, in der R und R' $C_1$-$C_5$-Alkylgruppen sind und R'' und R''' unabhängig voneinander ausgewählt sind aus H und einer $C_1$-$C_4$-Alkylgruppe.

2. Harz nach Anspruch 1, bei dem die Menge von (c) und die Polymerisationsbedingungen zur Herstellung des Harzes so gewählt sind, daß sich nach der Fertigstellung ein durchschnittliches zahlenmäßiges Molekulargewicht von 100 bis 600 ergibt.

3. Harz nach Anspruch 1 oder Anspruch 2, bei dem der vinylgruppenhaltige, aromatische $C_8$-$C_{10}$-Kohlenwasserstoffstrom eine Destillatfraktion von dampfgecracktem aromatischem Kohlenwasserstoff mit einem Siedepunkt im Bereich von 80°C bis 260°C oder ein Styrol, α-Methylstyrol oder eine Mischung derselben ist.

4. Harz nach einem der vorhergehenden Ansprüche, bei dem der Piperylenstrom in dem Kohlenwasserstoffeinsatzmaterial in Mengen von mehr als 10 und weniger als 26 Gew.% vorhanden ist.

5. Harz nach einem der vorhergehenden Ansprüche, bei dem der Piperylenstrom aus wärmebehandeltem Piperylen besteht.

6. Harz nach einem der vorhergehenden Ansprüche, bei dem der Kettenübertragungsmittelstrom in Mengen von 45 bis 65 Gew.% vorhanden ist.

7. Harz nach einem der vorhergehenden Ansprüche, bei dem der Kettenübertragungsmittelstrom eine Mischung von durch Dimerisation von Propylen hergestellten $C_6$-Isomeren ist.

8. Harz nach einem der vorhergehenden Ansprüche, bei dem das Kohlenwasserstoffeinsatzmaterial:
   (a) 5 bis 50 Gewichtsteile Styrol, $\alpha$-Methylstyrol oder Mischungen derselben,
   (b) 10 bis 26 Gewichtsteile eines wärmebehandelten Piperylenstroms und
   (c) 25 bis 70 Gewichtsteile eines durch Dimerisation von Propylen hergestellten, gemischtes $C_6$-Olefin enthaltenden Stroms umfaßt.

9. Harz nach Anspruch 8, das einen Erweichungspunkt von mindestens 10°C, eine Gardner-Farbe von 2 oder weniger und eine Molekulargewichtsverteilung von 1,1 bis 1,3 mit einem durchschnittlichen zahlenmäßigen Molekulargewicht von 350 bis 500 aufweist.

10. Harz nach einem der Ansprüche 1 bis 7, erhältlich aus einem Einsatzmaterialstrom, der eine vinylgruppenhaltige, aromatische Komponente aus reinem Styrol- oder substituiertem Styrolmonomer oder Mischungen derselben in einer Menge von 10 bis 60 Gew.% enthält, wobei das Harz eine Gardner-Farbe von 2 oder weniger, vorzugsweise etwa 1, einen Erweichungspunkt von 15°C aufwärts und eine Molekulargewichtsverteilung von 1,15 bis 1,25 aufweist.

11. Verwendung eines Harzes gemäß einem der vorhergehenden Ansprüche als Klebrigmacher für Klebstoffe.

12. Klebstoffzusammensetzung, die 20 bis 80 Gew.% eines Styrol/Isopren/Styrol-, Polyethylen/Vinylacetat-, Styrol/Butadien- oder Styrol/Polyethylen/Polybutadien/Styrol-Copolymeren und 80 bis 20 Gew.% eines klebrigmachenden Kohlenwasserstoffharzes gemäß einem der Ansprüche 2 bis 8 mit einer Gardner-Farbe von weniger als 7 umfaßt.

13. Klebstoff nach Anspruch 12, der 35 bis 50 Gew.% des Harzes und ein Styrol/Butadien-Copolymer umfaßt.

14. Klebstoff nach Anspruch 12 oder 13, der außerdem bis zu 60 Gew.% eines Harzes mit hohem Erweichungspunkt, wobei der Erweichungspunkt bei 80°C bis 120°C liegt, umfaßt.

15. Klebstoff nach Anspruch 14, bei dem das Harz mit hohem Erweichungspunkt aliphatisch, aliphatisch/aromatisch, terpenisch-, terpenisch-/aliphatisch, terpenisch-/aromatisch, ein Harzester oder ein hydrierstes Produkt derselben ist.

16. Klebstoff nach einem der Ansprüche 12 bis 15, der außerdem bis zu 50 Gew.% eines inerten Füllstoffs enthält.

17. Wiederanlegbarer Windelverschluß zur Verwendung bei einer Babywindel mit einer Polyethylenaußenfläche, welcher ein Verschlußsubstrat, das aus einer Polymer- oder Cellulosefolie hergestellt worden ist, und 0,01778 mm bis 0,0381 mm (0,7 mil bis 1,5 mil) eines Klebstoffs, der 40 bis 65 Gew.% eines Copolymeren aus Styrol und Butadien mit 40 bis 50 Gew.% Styrolmonomer und 50 bis 30 Gew.% eines Kohlenwasserstoffharzes gemäß einem der Ansprüche 1 bis 8 umfaßt, wobei das Harz eine Gardner-Farbe von 3 oder weniger aufweist.